# EUROPEAN PATENT APPLICATION

(11) **EP 4 480 906 A1**
(43) Date of publication of application: **25.12.2024**
(21) Application number: 24180419.4
(22) Date of filing: 06.06.2024
(51) Int. Cl.: C01B 3/24, B01F 23/00, B01J 19/00

(54) **METHOD AND SYSTEM FOR DECOMPOSING A FEEDSTOCK**

(30) Priority: 16.06.2023 US 202363521493 P
(71) Applicant: Ekona Power Inc., Burnaby, British Columbia, V5A 2H5 (CA)
(72) Inventor: COLEMAN, Timothy Scott, Burnaby, V5A 2H5 (CA)
(74) Representative: Boult Wade Tennant LLP

(57) **Abstract**

A volume of a reaction chamber is increased to draw a feedstock into the reaction chamber. An energy fluid is flowed into the reaction chamber to mix with the feedstock. As a result of the mixing of the energy fluid with the feedstock, energy is transferred from the energy fluid to the feedstock and causes the feedstock to decompose and form one or more reaction products. The volume of the reaction chamber is decreased to expel the one or more reaction products from the reaction chamber.

## Description

### Field

The present disclosure relates to thermal pyrolysis and in particular to a method and system for decomposing a feedstock.

### Background

Thermal pyrolysis is a method by which a feedstock gas, such as a hydrocarbon, is decomposed without oxygen into its constituent elements (in the case of a hydrocarbon, carbon and hydrogen). The decomposition is triggered by sufficiently raising the temperature of the feedstock gas to a point at which the chemical bonds of the elements of the feedstock gas break down.

Such pyrolysis may be achieved, for example, by bringing the feedstock gas into thermal contact with a hot fluid. For instance, combustion product gases, formed as a result of combusting a combustible fuel, may be mixed with the feedstock gas. At high-enough temperatures, the mixing of the hot fluid with the feedstock gas, and the transfer of thermal energy from the hot fluid to the feedstock gas, is sufficient to cause the feedstock gas to break down and decompose.

When operating a feedstock gas reactor, it is generally desirable for the feedstock being loaded into the reaction chamber to have a plug flow. The plug flow may assist in moving the reaction product gases, generated from the previous reaction cycle, out of the reaction chamber. The plug flow may also help to minimize mixing between the feedstock and the reaction products from the previous reaction cycle.

Achieving this plug flow is difficult, however, and generally requires the use of flow straighteners within the reaction chamber. Flow straighteners must therefore be able to endure the high temperatures generated within the reaction chamber, and can be prone to plugging with carbon due to their small flow passages.

### Summary

According to a first aspect of the disclosure, there is provided a method of decomposing a feedstock in a reaction chamber, comprising: increasing a volume of the reaction chamber to draw the feedstock into the reaction chamber; flowing an energy fluid into the reaction chamber to mix with the feedstock, wherein, as a result of the mixing of the energy fluid with the feedstock, energy is transferred from the energy fluid to the feedstock and causes the feedstock to decompose and form one or more reaction products; and decreasing the volume of the reaction chamber to expel the one or more reaction products from the reaction chamber.

Drawing the feedstock into the reaction chamber may comprise drawing the feedstock into the reaction chamber via one or more feedstock inlets. Expelling the reaction products from the reaction chamber may comprise expelling the reaction products from the reaction chamber via one or more product outlets.

The one or more feedstock inlets and the one or more product outlets may be located at a common end of the reaction chamber.

Flowing the energy fluid into the reaction chamber may comprise: combusting, in a combustion chamber connected to the reaction chamber, a combustible mixture to form one or more combustion products; and flowing the one or more combustion products into the reaction chamber.

Combusting the combustible mixture may comprise: flowing one or more combustible gases into the combustion chamber via one or more combustion inlets, to thereby form the combustible mixture; and combusting the combustible mixture in the combustion chamber.

Flowing the one or more combustible gases into the combustion chamber may comprise increasing the volume of the reaction chamber to draw the one or more combustible gases into the combustion chamber via the one or more combustion inlets.

Decreasing the volume of the reaction chamber may comprise: closing the one or more combustion inlets; and after closing the one or more combustion inlets, decreasing the volume of the reaction chamber.

Flowing the one or more combustible gases into the combustion chamber may comprise flowing a fuel and an oxidant into the combustion chamber.

The oxidant may comprise air or pure oxygen.

The fuel may have the same composition as that of the feedstock.

Prior to flowing the one or more combustible gases into the combustion chamber, the combustion chamber may contain gases from a previous reaction cycle. Flowing the one or more combustible gases into the combustion chamber may comprise expelling the gases from the previous reaction cycle out of the combustion chamber and into the reaction chamber, as a result of flowing the one or more combustible gases into the combustion chamber.

Drawing the feedstock into the reaction chamber may comprise drawing the feedstock into the reaction chamber via one or more feedstock inlets. Decreasing the volume of the reaction chamber may comprise: closing the one or more feedstock inlets; and after closing the one or more feedstock inlets, decreasing the volume of the reaction chamber.

Decreasing the volume of the reaction chamber may comprise: opening the one or more product outlets; and after opening the one or more product outlets, decreasing the volume of the reaction chamber.

The decomposition of the feedstock may be a constant-volume process in which the volume of the reaction chamber is held constant.

The feedstock may comprise a hydrocarbon.

According to a further aspect of the disclosure, there is provided a system comprising: a reaction chamber; a combustion chamber connected to the reaction chamber; one or more feedstock inlets for allowing a feedstock to enter the reaction chamber; one or more combustion inlets for allowing one or more combustible gases to enter the combustion chamber; and one or more product outlets for allowing reaction products to exit the reaction chamber; a driving mechanism for controlling a volume of the reaction chamber; one or more igniters in the combustion chamber; and a controller, comprising circuitry, configured to: control the driving mechanism to increase the volume of the reaction chamber and thereby draw the feedstock into the reaction chamber via the one or more feedstock inlets, and draw the one or more combustible gases into the combustion chamber via the one or more combustion inlets; close the one or more feedstock inlets and the one or more combustion inlets; control the one or more igniters to combust the one or more combustible gases and thereby form one or more combustion products that flow into the reaction chamber and mix with the feedstock, wherein, as a result of the mixing of the one or more combustion products with the feedstock, energy is transferred from the one or more combustion products to the feedstock and causes the feedstock to decompose and form one or more reaction products; and control the driving mechanism to decrease the volume of the reaction chamber and thereby expel the one or more reaction products from the reaction chamber via the one or more product outlets.

The one or more feedstock inlets and the one or more product inlets may be at a common end of the reaction chamber.

The driving mechanism may comprise a piston.

The controller may be further configured to open the one or more combustion inlets when the driving mechanism reaches the combustion chamber as the volume of the reaction chamber is being increased.

This summary does not necessarily describe the entire scope of all aspects. Other aspects, features, and advantages will be apparent to those of ordinary skill in the art upon review of the following description of specific embodiments.

### Drawings

Embodiments of the disclosure will now be described in detail in conjunction with the accompanying drawings of which:
FIG. 1 is a schematic diagram of a feedstock reactor according to an embodiment of the disclosure;
FIG. 2 is a schematic diagram of the feedstock reactor of FIG. 1 at the beginning of a loading phase, according to an embodiment of the disclosure;
FIG. 3 is a schematic diagram of the feedstock reactor of FIG. 1 during the loading phase, according to an embodiment of the disclosure;
FIG. 4 is a schematic diagram of the feedstock reactor of FIG. 1 during a combustion phase, according to an embodiment of the disclosure;
FIG. 5 is a schematic diagram of the feedstock reactor of FIG. 1 during an unloading phase, according to an embodiment of the disclosure; and
FIG. 6 is a flow diagram of a method of operating a feedstock reactor, according to an embodiment of the disclosure.

### Detailed Description

The present disclosure seeks to provide novel methods and systems for decomposing a feedstock in a reaction chamber. While various embodiments of the disclosure are described below, the disclosure is not limited to these embodiments, and variations of these embodiments may well fall within the scope of the disclosure which is to be limited only by the appended claims.

Generally, according to embodiments of the disclosure, there are described methods of decomposing a feedstock in a reaction chamber. A volume of the reaction chamber is increased to draw the feedstock into the reaction chamber. An energy fluid is flowed into the reaction chamber to mix with the feedstock. As a result of the mixing of the energy fluid with the feedstock, energy is transferred from the energy fluid to the feedstock and causes the feedstock to decompose and form one or more reaction products. The volume of the reaction chamber is then decreased to expel the one or more reaction products from the reaction chamber. The energy fluid may be any fluid having sufficient thermal energy such that, when brought into thermal contact with the feedstock, decomposition of the feedstock is triggered.

According to some embodiments, the energy fluid may be formed by combusting a fuel-oxidant mixture. The combustion products that are generated by the combustion may constitute the energy fluid, and the combustion products may be caused to flow into contact, and mix with, the feedstock.

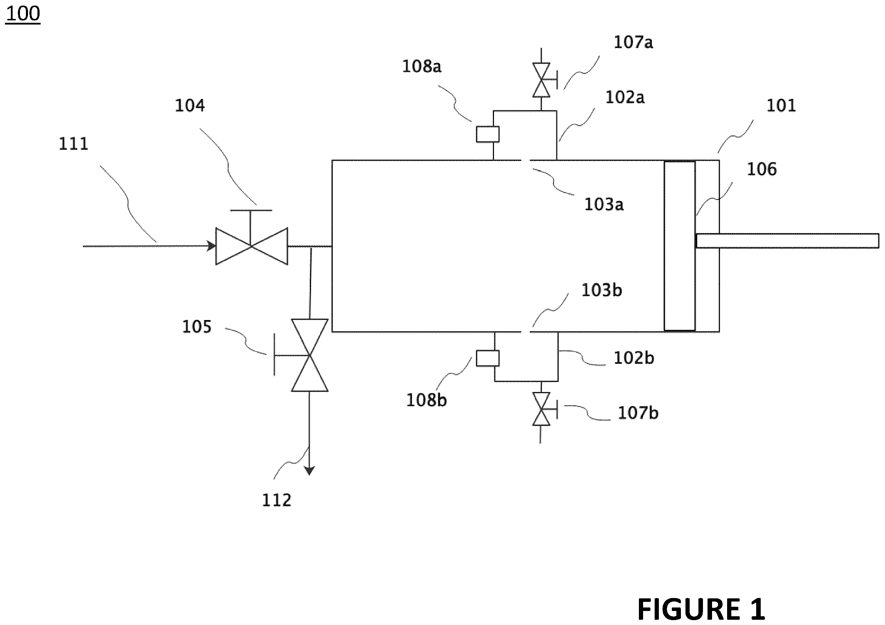

Turning to FIGS. 1-5, there are shown the various stages of operation of a feedstock reactor according to an embodiment of the disclosure. Generally, in each of FIGS. 1-5, a feedstock reactor 100 includes a reaction chamber 101. Reaction chamber 101 is connected to a feedstock inlet 104 for allowing a feedstock 111 to enter reaction chamber 101, and a product outlet 105 for allowing reaction products 112 to exit reaction chamber 101. Both feedstock inlet 104 and product outlet 105 are located at a common end of feedstock reactor 100.

A pair of combustion chambers 102a and 102b are connected to reaction chamber 101 via one or more passageways 103a, 103b. According to other embodiments, more or fewer combustion chambers may be connected to reaction chamber 101. Each combustion chamber 102a, 102b is connected to a combustion inlet 107a, 107b for allowing a combustible gas mixture to enter the combustion chamber. Each combustion chamber 102a, 102b further includes an igniter 108a, 108b for triggering combustion of the combustible gas mixture. A reciprocating piston 106 is configured to alternately increase and decrease the effective volume of reaction chamber 101.

According to some embodiments, the combustible gas mixture comprises a mixture of a fuel (such as a hydrocarbon, such as methane) and an oxidant (such as pure oxygen or air). The fuel may have the same composition as the feedstock. The fuel and oxidant may be delivered to combustion chambers 102a, 102b pre-mixed, or alternatively the fuel and oxidant may be separately delivered via respective inlets to combustion chambers 102a, 102b, and may be mixed together within combustion chambers 102a, 102b, using any of various suitable mixing strategies (for example, by appropriate positioning of the fuel and oxidant inlets).

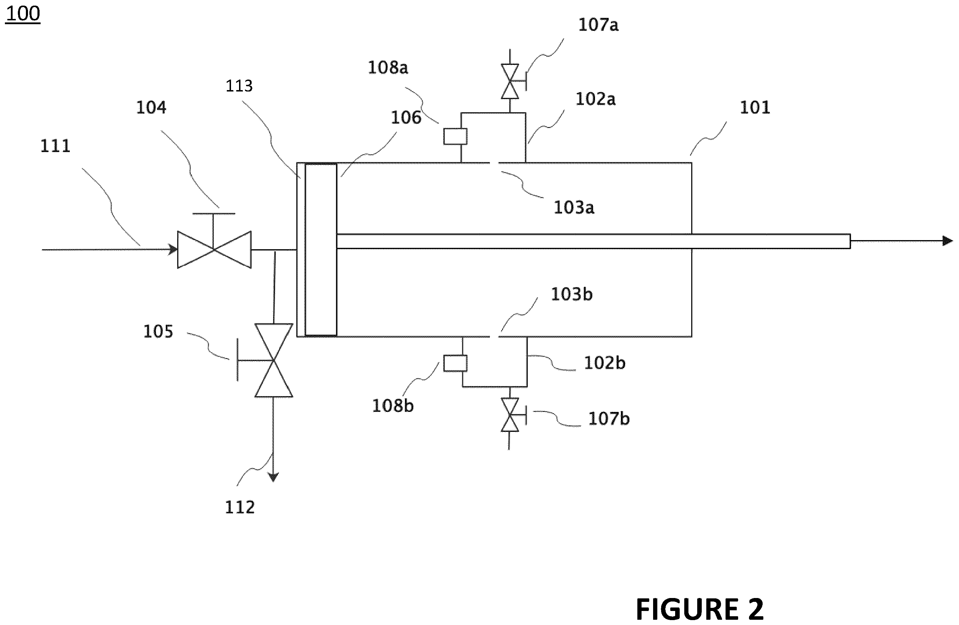

During a loading sequence (FIG. 2), piston 106 is positioned such that the volume 113 of reaction chamber 101 is near zero, product outlet 105 is closed, and feedstock inlet 104 is open. Piston 106 is then moved to the right by a controller (not shown), thereby increasing volume 113 of reaction chamber 101, and drawing feedstock gas 111 into reaction chamber 101. Prior to entering reaction chamber 101, the feedstock may be pre-heated (for example, by using a heat exchanger or some other heater). This may reduce the requirements on the temperature of the combustion products (described in further detail below) that is needed to trigger decomposition of the feedstock.

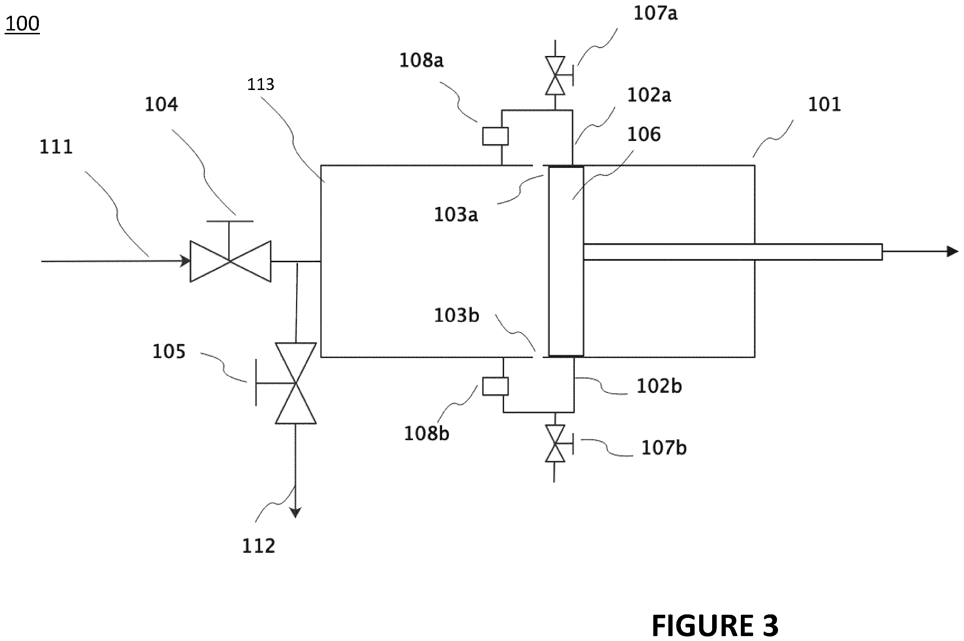

Once piston 106 reaches the combustion chambers 102a and 102b (FIG. 3), combustion inlets 107a and 107b are opened, allowing combustible gases to enter combustion chambers 102a and 102b. As the combustible gases are drawn into combustion chambers 102a and 102b, combustion products and other gases from the previous reaction cycle are pushed out of combustion chambers 102a and 102b and into reaction chamber 101 via passageways 103a and 103b.

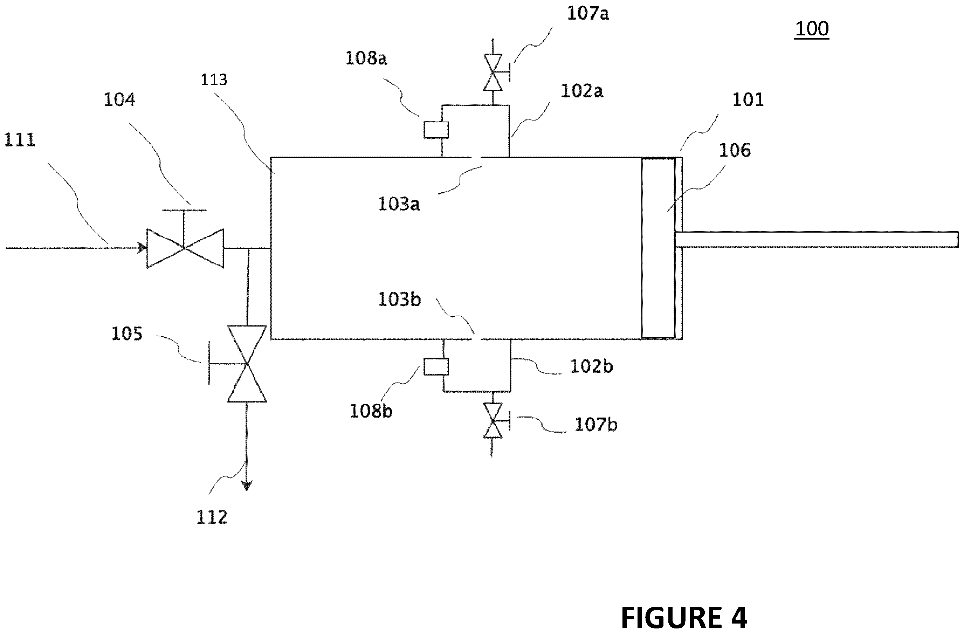

When piston 106 reaches the far end of reaction chamber 101 (i.e., the end of reaction chamber 101 opposite the end at which are located feedstock inlet 104 and product outlet 105, as seen in FIG. 4), feedstock inlet 104 and combustion inlets 107a and 107b are closed. The combustible gases in combustion chambers 102a and 102b are then ignited by ignitors 108a and 108b. The resulting high-temperature and high-pressure combustion products then flow out of combustion chambers 102a and 102b via passageways 103a and 103b, and are injected into reaction chamber 101, wherein the combustion products mix with and trigger decomposition of feedstock 111. The decomposition of feedstock 111 is a constant-volume process, given the sealed nature of reaction chamber 101 and combustion chambers 102a and 102b.

In particular, thermal energy is transferred from the combustion products to feedstock 111. Energy is also transferred from the hot combustion products to feedstock 111 via dynamic compression of feedstock 111 as a result of the pressure increasing within reaction chamber 101 in response to the flow of hot, pressurized combustion products into reaction chamber 101. Past a certain point, the increase in the temperature of feedstock 111 is sufficient to drive decomposition or pyrolysis of feedstock 111. In the case of methane, for example, the decomposition takes the following form:

CH₄ + energy → C + 2H₂

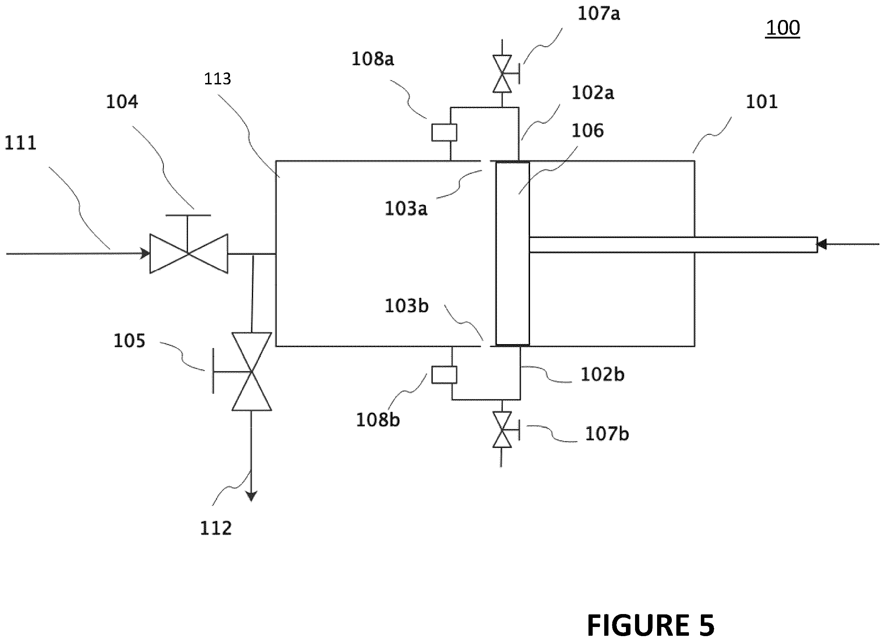

Once the desired reaction is completed, product outlet 105 is opened and piston 106 is moved back to the left (i.e., toward the end of reaction chamber 101 at which are located feedstock inlet 104 and product outlet 105, as can be seen in FIG. 5). Reaction products 112 generated as a result of the pyrolysis are pushed out of reaction chamber 101 via product outlet 105. The cycle may then be repeated.

According to some embodiments, a portion of reaction products 112 may be recycled back to reaction chamber 101 for future reaction cycles. In the case of methane pyrolysis, reaction products 112 may comprise one or more of hydrogen, nitrogen, and carbon, the unwanted products are primarily carbon dioxide, nitrogen, and water, and the recycled gas mixture comprises primarily unreacted natural gas, hydrogen, nitrogen, and carbon monoxide.

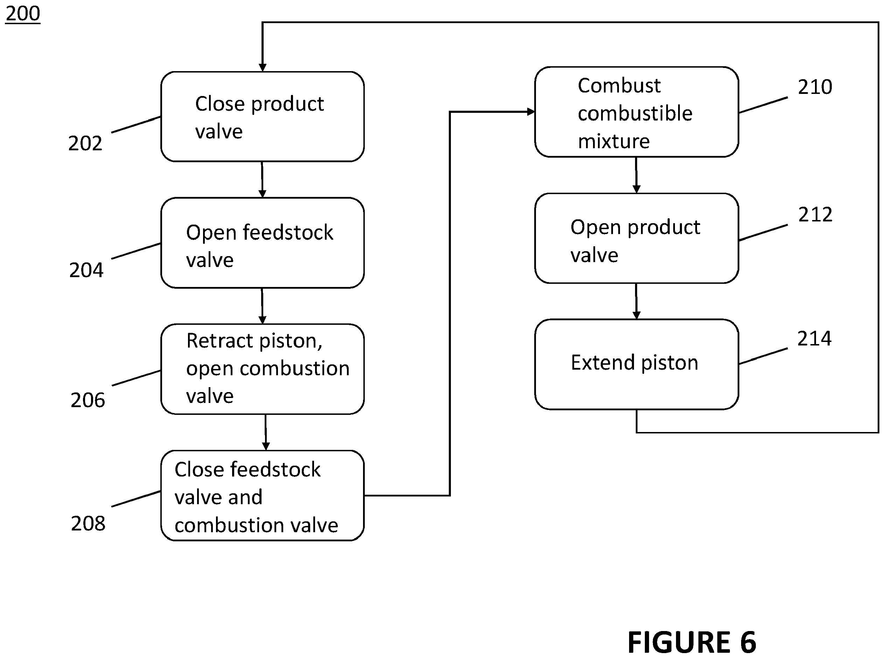

Turning to FIG. 6, there is shown a flow diagram of a method 200 of decomposing a feedstock, according to an embodiment of the disclosure. The method described in FIG. 6 may be used, for example, in conjunction with the feedstock reactor shown in FIGS. 1-5.

At block 202, a product valve of a reaction chamber is closed. The product valve allows reaction products generated within the reaction chamber to flow out of the reaction chamber.

At block 204, a feedstock valve of the reaction chamber is opened. The feedstock valve allows a feedstock to flow into the reaction chamber. According to some embodiments, the operation performed at block 204 may precede the one performed at block 202, or alternatively they may occur at the same time.

At block 206, the volume of the reaction chamber is increased, for example by retracting a piston or other drive mechanism. The increasing of the volume of the reaction chamber creates a pressure differential which draws feedstock into the reaction chamber via the open feedstock valve. During the retraction of the piston, n combustion valve of a combustion chamber is opened. The combustion chamber is fluidly connected to the reaction chamber. The combustion valve allows combustible gases, such as a mixture of air / pure oxygen and a fuel (such as gas having the same composition as the feedstock (for example, recycled feedstock)) to flow into the combustion chamber. Once the combustion valve is opened, the pressure differential induced by continued retraction of the piston draws the combustible gases into the combustion chamber via the open combustion valve. As the combustible gases are drawn into combustion chamber, combustion products and other gases from the previous reaction cycle are pushed out of the combustion chamber and into the reaction chamber.

The combustion valve may be opened when the piston reaches the combustion chamber. This may be advantageous since, if the combustion valve is opened before the piston reaches the combustion chamber, then the combustion gases and/or combustion products from the previous reaction cycle may enter the combustion chamber and flow into the reaction chamber behind the piston (the pressure behind the piston is not necessarily the same as the pressure in front of the piston).

According to some embodiments, the combustion valve may be opened at the same time as the operations in block 202 and/or block 204, or even before those operations.

At block 208, the feedstock valve and the combustion valve are closed.

At block 210, the combustible gas mixture within the combustion chamber is combusted, for example by triggering an igniter such as a spark plug. The combustion of the combustible gas mixture generates combustion products that, under pressure, flow into the reaction chamber, mix with the feedstock, and cause the feedstock to decompose and generate reaction products.

At block 212, the product valve is opened.

At block 214, the volume of the reaction chamber is decreased, for example by extending the piston. This creates a pressure differential which forces the reaction products out of the reaction chamber via the open product valve.

The cycle may then be repeated by returning to block 202.

Besides eliminating the need for flow straighteners / plug flow characteristics, the reciprocating design described herein also provides a number of additional benefits. For example, locating the feedstock inlet and product outlet at the same end of the reactor may improve thermal performance by reducing parasitic heat loss. This may increase the effective temperature of the feedstock during the loading portion of the cycle which is useful since this lowers the requirements on the temperature of the combustion products that is needed to trigger decomposition of the feedstock.

Furthermore, the moving piston may scrape the walls of the reaction chamber and eliminate carbon fouling and buildup which is a common problem with many pyrolysis reactors.

Further still, the pressure of the feedstock at the inlet can be reduced relative to the pressure of the product gas. This may reduce or eliminate the need for a recycle compressor which may significantly improve performance and reduce capital and operating costs.

Operation of the reactor's various valves may be controlled by a suitable controller (such as a microprocessor) comprising circuitry.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

## Claims

1. A method of decomposing a feedstock in a reaction chamber, comprising:
increasing a volume of the reaction chamber to draw the feedstock into the reaction chamber;
flowing an energy fluid into the reaction chamber to mix with the feedstock, wherein, as a result of the mixing of the energy fluid with the feedstock, energy is transferred from the energy fluid to the feedstock and causes the feedstock to decompose and form one or more reaction products; and
decreasing the volume of the reaction chamber to expel the one or more reaction products from the reaction chamber.

2. The method of claim 1, wherein:
drawing the feedstock into the reaction chamber comprises drawing the feedstock into the reaction chamber via one or more feedstock inlets; and
expelling the reaction products from the reaction chamber comprises expelling the reaction products from the reaction chamber via one or more product outlets.

3. The method of claim 2, wherein the one or more feedstock inlets and the one or more product outlets are located at a common end of the reaction chamber.

4. The method of any one of claims 1-3, wherein flowing the energy fluid into the reaction chamber comprises:
combusting, in a combustion chamber connected to the reaction chamber, a combustible mixture to form one or more combustion products; and
flowing the one or more combustion products into the reaction chamber.

5. The method of claim 4, wherein combusting the combustible mixture comprises:
flowing one or more combustible gases into the combustion chamber via one or more combustion inlets, to thereby form the combustible mixture; and
combusting the combustible mixture in the combustion chamber.

6. The method of claim 5, wherein flowing the one or more combustible gases into the combustion chamber comprises increasing the volume of the reaction chamber to draw the one or more combustible gases into the combustion chamber via the one or more combustion inlets.

7. The method of claim 6, wherein decreasing the volume of the reaction chamber comprises:
closing the one or more combustion inlets; and
after closing the one or more combustion inlets, decreasing the volume of the reaction chamber.

8. The method of any one of claims 5-7, wherein flowing the one or more combustible gases into the combustion chamber comprises:
flowing a fuel and an oxidant into the combustion chamber.

9. The method of any one of claims 5-8, wherein:
prior to flowing the one or more combustible gases into the combustion chamber, the combustion chamber contains gases from a previous reaction cycle; and
flowing the one or more combustible gases into the combustion chamber comprises expelling the gases from the previous reaction cycle out of the combustion chamber and into the reaction chamber, as a result of flowing the one or more combustible gases into the combustion chamber.

10. The method of any one of claims 1-9, wherein:
drawing the feedstock into the reaction chamber comprises drawing the feedstock into the reaction chamber via one or more feedstock inlets; and
decreasing the volume of the reaction chamber comprises:
closing the one or more feedstock inlets; and
after closing the one or more feedstock inlets, decreasing the volume of the reaction chamber.

11. The method of claim 10, wherein decreasing the volume of the reaction chamber comprises:
opening the one or more product outlets; and
after opening the one or more product outlets, decreasing the volume of the reaction chamber.

12. The method of any one of claims 1-11, wherein the decomposition of the feedstock is a constant-volume process in which the volume of the reaction chamber is held constant.

13. A system comprising:
a reaction chamber;
a combustion chamber connected to the reaction chamber;
one or more feedstock inlets for allowing a feedstock to enter the reaction chamber;
one or more combustion inlets for allowing one or more combustible gases to enter the combustion chamber; and
one or more product outlets for allowing reaction products to exit the reaction chamber;
a driving mechanism for controlling a volume of the reaction chamber;
one or more igniters in the combustion chamber; and
a controller, comprising circuitry, configured to:
control the driving mechanism to increase the volume of the reaction chamber and thereby draw the feedstock into the reaction chamber via the one or more feedstock inlets, and draw the one or more combustible gases into the combustion chamber via the one or more combustion inlets;
close the one or more feedstock inlets and the one or more combustion inlets;
control the one or more igniters to combust the one or more combustible gases and thereby form one or more combustion products that flow into the reaction chamber and mix with the feedstock, wherein, as a result of the mixing of the one or more combustion products with the feedstock, energy is transferred from the one or more combustion products to the feedstock and causes the feedstock to decompose and form one or more reaction products; and
control the driving mechanism to decrease the volume of the reaction chamber and thereby expel the one or more reaction products from the reaction chamber via the one or more product outlets.

14. The system of claim 13, wherein the driving mechanism comprises a piston.

15. The system of claim 13 or 14, wherein the controller is further configured to open the one or more combustion inlets when the driving mechanism reaches the combustion chamber as the volume of the reaction chamber is being increased.
